# EUROPEAN PATENT APPLICATION

(11) **EP 1 220 007 A2**
(43) Date of publication of application: **03.07.2002**
(21) Application number: 01130980.4
(22) Date of filing: 28.12.2001
(51) Int. Cl.: G02B 23/06, G02B 5/28, G21K 1/06

(54) **Wide band normal incident telescope**

(30) Priority: 28.12.2000 JP 2000400417; 17.12.2001 JP 2001382599
(71) Applicant: RIKEN, Wako-shi, Saitama 351-0198 (JP)
(72) Inventor: Takizawa, Yoshiyuki, c/o Riken, Wako-shi, Saitama 351-0198 (JP); Takahashi, Yoshiyuki, c/o Riken, Wako-shi, Saitama 351-0198 (JP); Ebisuzaki, Toshikazu, c/o Riken, Wako-shi, Saitama 351-0198 (JP); Shimizu, Hirohiko M., c/o Riken, Wako-shi, Saitama 351-0198 (JP)
(74) Representative: Grünecker, Kinkeldey, Stockmair & Schwanhäusser Anwaltssozietät

(57) **Abstract**

In order to make possible to observe light rays in a wide energy band by reflecting the respective light rays therein, for example those in a region extending from soft X-ray to visible light at high reflection factors, a wide band normal incident telescope comprises a reflecting mirror involving a surface part wherein different types of multilayer films have been formed, respectively, in every regions of predetermined shapes, and reflecting light rays, which were input, by the surface part; and a detector to which the light rays reflected by the surface part are input, and which detects spectrally the light rays thus input.

## Description

### Background of the Invention

### Field of The Invention

The present invention relates to a wide band normal incident telescope, and more particularly to a wide band normal incident telescope used suitably for astronomic observation wherein emission line extending over a wide energy band are input vertically.

### Description of The Related Art

Heretofore, a normal incident telescope for observing emission of a predetermined energy, which involves a mirror reflecting only light having a predetermined energy corresponding to a multilayer film formed on a surface of the mirror at high reflectivity, and a detector such as a semiconductor detector for detecting light of the predetermined energy as a result of condensing light reflected by the reflecting mirror has been known.

On one hand, since an apparent energy level varies considerably due to collective motion and red shift in astronomic observation, light cannot be observed in an energy band anticipated in rest system. Because a multilayer film in a conventional reflecting mirror is concerned with narrow band in which only light having a predetermined energy is reflected at high reflectivity, a discovery of line spectrum in a celestial body, which fluctuates remarkably, cannot be expected.

Namely, in astronomic observation as described above, a normal incident telescope by which rays in a wide energy band can be observed is desired. Particularly, since complex index of refraction is approximately 1 (one) and further, each of 5 (= 1 - n) and extinction coefficient κ is also a value being sufficiently smaller than 1 (one) in a region extending from soft X-ray to extreme ultraviolet, a reflectivity of normal incidence does not reach 1% in bulk. Besides, rays in a region extending from extreme ultraviolet to soft X-ray are absorbed by atmospheric air. In these circumstances, a normal incident telescope by which observation can be made outside aerosphere is desired.

However, since a multilayer film formed on the surface of a reflecting mirror exhibits high reflectivity with respect to only light of a predetermined energy in a conventional normal incident telescope, there has been such a problem that only the light having the certain energy reflected at the high reflectivity by the reflecting mirror on which has been formed the multilayer film can be observed, but light rays in a wide energy band, for example, light rays in a region extending from soft X-ray to visible light cannot be observed.

Furthermore, in a normal incident telescope of the prior art, only light having a predetermined energy in response to a multilayer film of a reflecting mirror can be observed. Accordingly, in order to observe photons in a wide energy band, it is required to use a plurality of conventional normal incident telescopes each of them comprises a reflecting mirror involving a multilayer film reflecting light rays of a different energy from one another, so that there has been a problem of giving rise to increase costs for requiring the plurality of normal incident telescopes.

Moreover, when the plurality of conventional normal incident telescopes each involving a reflecting mirror wherein a multilayer film reflecting light rays of a different energy is formed are used, it is required to control the plurality of normal incident telescopes, so that there has been a problem of decrease in efficiency of a system of these normal incident telescopes.

### Object and Summary of The Invention

The present invention has been made in view of the above-described problems involved in the prior art.

An object of the invention is to provide a wide band normal incident telescope in which light rays in a wide energy band, for example, extending from visible light to soft X-ray are reflected, respectively, at high reflectivity by a single reflecting mirror, whereby light rays in a wide energy band can be observed.

Another object of the present invention is to provide a wide band normal incident telescope by which light rays in a wide energy band, for example, a region extending from visible light to soft X-ray are reflected, respectively, at high reflectivity by a single reflecting mirror, whereby it makes no need for using a plurality of normal incident telescopes to achieve decrease in its costs, besides, light rays in a wide energy band can be efficiently observed.

In order to achieve the above-described objects, a wide band normal incident telescope according to the present invention comprises a reflecting mirror involving a surface part wherein different types of multilayer films have been formed, respectively, in every regions of predetermined shapes, and reflecting light rays, which were input, by the surface part; and a detector to which the light rays reflected by the surface part are input, and which detects spectrally the light rays thus input.

According to the above arrangement of the present invention, when light rays in a wide energy band are input to a surface part of a mirror, respective photons each having a predetermined energy among those in the wide energy band are reflected by corresponding types of multilayer films, and the light rays reflected by the surface part of the reflecting mirror are spectrally detected by a detector. Hence, respective photons in a wide energy band can be observed.

Furthermore, since respective light rays in a wide energy band are reflected by a single reflecting mirror at high reflectivity, it becomes to be not necessary for using a plurality of normal incident telescopes, so that the costs can be reduced, besides, photons in a wide energy band can be observed.

Moreover, a wide band normal incident telescope according to the present invention is constituted in such that different types of multilayer films on the surface part are the ones reflecting respectively photons having predetermined energies in a region extending from extreme ultraviolet ray to soft X-ray as well as having high reflection factors due to total reflection over a region extending from visible light to vacuum ultraviolet ray,

According to the above arrangement, light rays having predetermined energies in a region extending from extreme ultraviolet ray to soft X-ray are reflected by a boundary surface defined between layers of a multilayer film in the plurality of the regions of the single reflecting mirror, so that these light rays are reflected at high reflectivity due to interference, besides respective photons over a region from visible light to vacuum ultraviolet ray are reflected by the surface of the multilayer films at high reflectivity due to total reflection (specular reflection), so that light rays in a region of wide energy band extending from visible light to soft X-ray, which are input, can be simultaneously observed.

Further, a wide band normal incident telescope according to the present invention may be constituted in such that the surface part involves a circular shape and which has been divided into a plurality of sector-shaped areas each having a predetermined central angle containing a central portion of the circular shape as its apex,

Besides, a wide band normal incident telescope according to the present invention may be constituted in such that the surface part is composed of a plurality of sections each involving a predetermined number of the sector-shaped areas in which types of multilayer films formed therein and orders in alignment of the multilayer films coincide with each other in the plural sections, respectively.

According to the above arrangement, respective light rays of predetermined energies among light rays in a wide energy band, which were input to the surface of the reflecting mirror are reflected in the sector-shaped areas corresponding to the plurality of sections, i.e., the plurality of places, whereby reflected light rays from the plurality of places are condensed to the detector, so that high imaging performance is obtained.

Furthermore, the same multilayer films may be provided over the whole surface of a reflecting mirror in the present invention.

Namely, a wide band normal incident telescope according to the present invention may be constituted to comprise a reflecting mirror involving a surface part wherein multilayer films have been formed, and reflecting light rays, which were input, by the surface part, wherein each periodic length is changed continuously in each of the multilayer films along its depth direction of the multilayer film to reflect, respectively, light rays each having a predetermined energy in a region extending from extreme ultraviolet to soft X-ray, and the multilayer films have also high reflection factors due to total reflection over a region extending from vacuum ultraviolet ray to visible light; and a detector to which the light rays reflected by said surface part of said reflecting mirror are input, and which detects spectrally the incidence rays.

According to the above arrangement, respective light rays in a wide energy band, which were input to the surface part of the reflecting mirror, are reflected by a boundary surface defined between layers each having a corresponding periodic length of supermirrors being the multilayer films wherein such periodic length is changed continuously in the depth direction thereof in the present invention, whereby the light rays reflected by the surface part of the reflecting mirror are detected spectrally by means of the detector, so that light rays input in a wide energy band of a region extending from visible light to soft X-ray can be observed simultaneously.

Moreover, a wide band normal incident telescope according to the present invention comprises a first reflecting mirror involving a first surface part in which multilayer films have been formed, and reflecting light rays, which were input, by the first surface part, wherein each periodic length is changed continuously in each of the multilayer films along the depth direction of the multilayer films to reflect, respectively, light rays each having a predetermined energy in a region extending from soft X-ray to extreme ultraviolet, and the multilayer films have high reflection factors due to total reflection over a region extending from visible light to vacuum ultraviolet ray; a second reflecting mirror involving a second surface part wherein multilayer films have been formed, and reflecting light rays, which were reflected by the first surface part of the first reflecting mirror, by the second surface wherein each periodic length is changed continuously in each of the multilayer films along the depth direction thereof in response to the first surface of the first reflecting mirror to reflect, respectively, light rays each having a predetermined energy in a region extending from extreme ultraviolet ray to soft X-ray, and the multilayer films have high reflection factors due to total reflection over a region extending from vacuum ultraviolet ray to visible light; and a detector to which the light rays reflected by the second surface part of the second reflecting mirror are input, and which detects spectrally the incidence rays.

According to the above arrangement, respective light rays in a wide energy band, which were input to the first surface part of the first reflecting mirror, are reflected by a boundary surface defined between layers each having a corresponding periodic length of supermirrors being the multilayer films wherein such periodic length is changed continuously in the depth direction thereof in the present invention, whereby the light rays reflected by the first surface part of the first reflecting mirror are reflected by the second surface of the second reflecting mirror to be detected spectrally by means of the detector, so that light rays input in a wide energy band of a region extending from visible light to soft x-ray can be observed simultaneously. Besides, since the second reflecting mirror reflecting the light rays, which were reflected by the first surface part of the first reflecting mirror, is used, aberration correction can be made. Thus, the light rays reflected by the second reflecting mirror are input to the detector, so that it becomes possible to place the detector on a rear side of the first surface of the first reflecting mirror.

Furthermore, a wide band normal incident teles cope according to the present invention may be constituted in such that the above-described detector is a superconducting tunnel junction device.

According to the above arrangement, respective light rays in a wide energy band reflected by a single reflecting mirror or a plurality of reflecting mirrors can be detected spectrally by means of a single detector as a result of employing a superconducting tunnel junction device which functions as a detector having high sensitivity and high spectroscopic capability in a wide band extending from infrared ray to X-ray in the present invention.

Furthermore, a wide band normal incident telescope according to the present invention comprises a reflecting mirror having a surface part involving four sections forming a circular shape, each section being prepared by disposing clockwise sequentially nine sector-shaped areas, each having a central angle of ten degrees, of a first sector-shaped area in which a multilayer film reflecting light rays of 100 eV energy has been formed, a second sector-shaped area in which a multilayer film reflecting light rays of 90 eV energy has been formed, a third sector-shaped area in which a multilayer film reflecting light rays of 80 eV energy has been formed, a fourth sector-shaped area in which a multilayer film reflecting light rays of 70 eV energy has been formed, a fifth sector-shaped area in which a multilayer film reflecting light rays of 60 eV energy has been formed, a sixth sector-shaped area in which a multilayer film reflecting light rays of 50 eV energy has been formed, a seventh sector-shaped area in which a multilayer film reflecting light rays of 40 eV energy has been formed, a eighth sector-shaped area in which a multilayer film reflecting light rays of 30 eV energy has been formed, and a ninth sector-shaped area in which a multilayer film reflecting light rays of 20 eV energy has been formed, and reflecting light rays, which were input, by the surface part; and a superconducting tunnel junction device to which the light rays reflected by the surface part of the reflecting mirror are input, and which detects spectrally the light rays thus input.

### Brief Description of The Drawing

The present invention will become more fully understood from the detailed description given hereinafter and the accompanying drawings which are given by way of illustration only, and thus are not limitative of the present invention, and wherein:
FIG. 1 is an explanatory view of a conceptual constitution illustrating a first embodiment of a wide band normal incident telescope according to the present invention;
FIG. 2 is an explanatory view in the direction of the arrow A in FIG. 1, which shows essentially a surface part of a reflecting mirror;
FIG. 3 is a partly enlarged explanatory view in a section taken along the line B-B in FIG. 2;
FIG. 4(a) and 4(b) are graphical representations wherein FIG. 4(a) is a graph indicating reflectivity of a surface of a superconducting tunnel junction device; and FIG. 4(b) is a graph indicating transmittance of the surface of the superconducting tunnel junction device;
FIG. 5 is a graphical representation indicating an example of energy resolution of a superconducting tunnel junction device in a region extending from extreme ultraviolet ray to soft X-ray;
FIG. 6 is a graphical representation indicating synthesized reflectivity characteristics of a reflecting mirror in a first embodiment of a wide band right incidence telescope according to the present invention;
FIGS. 7(a) and 7(b) are views each showing a reflecting mirror in a wide band normal incident telescope of a second embodiment according to the present invention wherein FIG. 7(a) is an explanatory view showing essentially a surface part of the reflecting mirror, and FIG. 7(b) is a partly enlarged explanatory view in a section taken along the line C-C of FIG. 7(a);
FIG. 8 is a table showing theoretical reflectivity data of respective multilayer films in plural types of sector-shaped areas in a surface part of a reflecting mirror corresponding to that of the wide band normal incident telescope of the first embodiment according to the present invention, which was used in a simulation;
FIG. 9 is a graphical representation indicating theoretical values of reflectivity in a multilayer film represented by reference number 3 in FIG. 8;
FIG. 10 is a graphical representation indicating theoretical values of synthesized reflectivity of a reflecting mirror in the case where energies up to 300 eV are considered;
FIG. 11 is a graphical representation indicating theoretical values of synthesized reflectivity of a reflecting mirror in the case where energies up to 125 eV or higher values are not considered;
FIG. 12 is a graphical representation indicating theoretical values of synthesized reflectivity of a reflecting mirror with respect to light rays having energies of 30 eV or lower;
FIG. 13 is a table indicating respective theoretical reflectivity data in plural types of supermirrors in a surface part of a reflecting mirror corresponding to a reflecting mirror in a wide band normal incident telescope of the second embodiment according to the present invention, which was used in a simulation;
FIG. 14 is a graphical representation indicating theoretical values of reflectivity of a supermirror represented by reference number 4 of FIG. 13;
FIG. 15 is a graphical representation indicating theoretical values of synthesized reflectivity of a reflecting mirror having a surface part of a supermirror representing the theoretical reflectivity data shown in FIG. 13;
FIGS. 16(a) and 16(b) are graphical representations each indicating transmittances of a metallic thin film filter wherein FIG. 16(a) is a graph indicating transmittances of an Al (aluminum) metallic thin film filter; and FIG. 16(b) is a graph indicating transmittances of C (carbon) metallic thin film filter;
FIGS. 17 (a) and 17 (b) are sectional views wherein FIG. 17 (a) is a sectional view corresponding to that of a wide band normal incident telescope of the second embodiment according to the present invention shown in FIGS. 7(a) and 7(b), and FIG. 17(b) *is* a sectional view of another example of a wide band normal incident telescope according to the present invention taken along the line D-D of FIG. 18; and
FIG. 18 is an explanatory view showing a further example of a wide band normal incident telescope according to the present invention.

### Detailed Description of The Preferred Embodiments

In the following, the first embodiment of a wide band normal incident telescope will be described in detail by referring to the accompanying drawings.

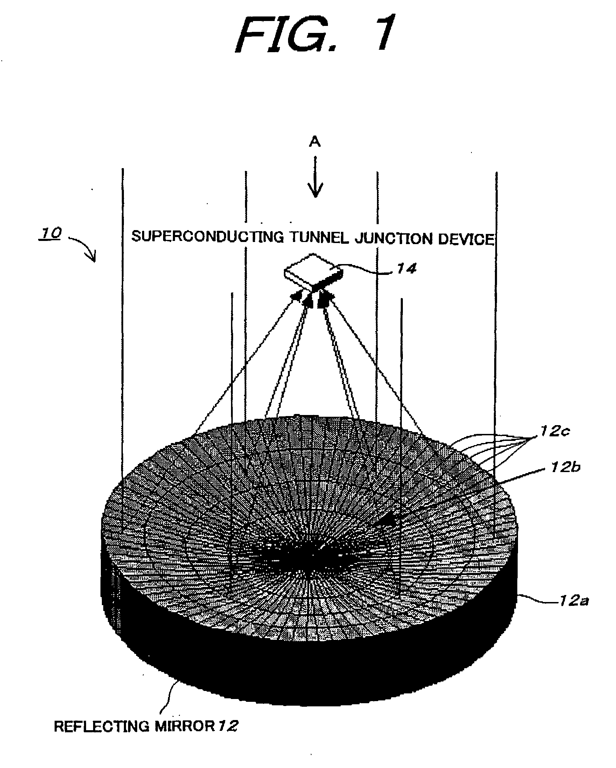

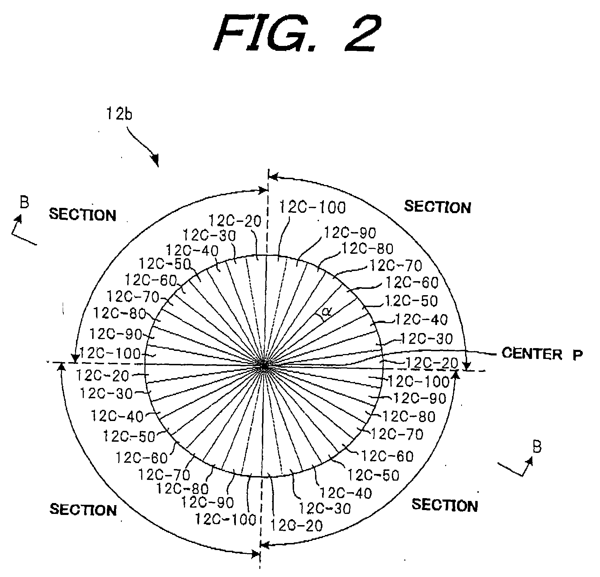

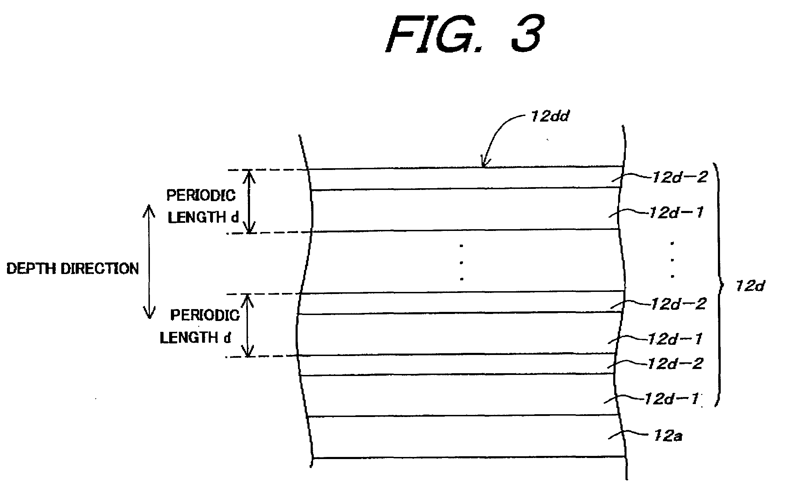

FIG. 1 is an explanatory view of a conceptual constitution illustrating the first embodiment of a wide band normal incident telescope according to the present invention; FIG. 2 is an explanatory view in the direction of the arrow A in FIG. 1; and FIG. 3 is a partly enlarged explanatory view in a section taken along the line B-B of FIG. 2.

A wide band normal incident telescope 10 according to the present invention as shown in FIG. 1 comprises a reflecting mirror 12 to which light rays are vertically input, and a superconducting tunnel junction (STJ) device 14 being a detector to which light rays reflected by the reflecting mirror are condensed.

In this case, the reflecting mirror 12 is a dish-shaped body 12a the whole configuration of which is circular, and a surface part 12b of the dish-shaped body 12a is formed into a paraboloid of revolution, which is concavely recessed centering around a central portion P.

The surface part 12b having a circular shape in the reflecting mirror 12 is sectioned into a plurality of sector-shaped areas 12c each of which is configured to involve a central portion P as its apex. Each of the plurality of sector-shaped areas 12c in the surface part 12b is fabricated in the form of multilayer films 12d, which reflect respectively light rays of each of predetermined energies in a region extending from soft X-ray to extreme ultraviolet ray, and have high reflection factors due to total internal reflection in a region extending from visible light to vacuum ultraviolet ray (see FIG. 3).

More specifically, the surface part 12b in the reflecting mirror 12 is sectioned into thirty-six sector-shaped areas 12c, each of which is configured to have a central angle α of ten degrees involving the central portion P as its apex, and each of them has an equal area.

Furthermore, nine sector-shaped areas 12c are grouped into one section as a set in the thirty-six sector-shaped areas 12c, so that four sections reside in the surface part 12b.

In each of these four sections, a sector-shaped area 12c-100 reflecting light having 100 eV energy, a sector-shaped area 12c-90 reflecting light having 90 eV energy, a sector-shaped area 12c-80 reflecting light having 80 eV energy, a sector-shaped area 12c-70 reflecting light having 70 eV energy, a sector-shaped area 12c-60 reflecting light having 60 eV energy, a sector-shaped area 12c-50 reflecting light having 50 eV energy, a sector-shaped area 12c-40 reflecting light having 40 eV energy, a sector-shaped area 12c-30 reflecting light having 30 eV energy, and a sector-shaped area 12c-20 reflecting light having 20 eV energy are disposed clockwise in this order in the nine sector-shaped areas 12c grouped into a section.

Each of these sector-shaped areas 12c-100, 12c-90, 12c-80, 12c-70, 12c-60, 12c-50, 12c-40, 12c-30, and 12c-20 has a structure of the same multilayer film 12d as that shown in FIG. 3 as described above.

The multilayer film 12d is formed as follows. Namely, a first layer 12d-1 having a predetermined refractive index is formed on the dish-shaped body 12a of the reflecting mirror 12, and a second layer 12d-2 having a different refractive index from that of the first refractive index 12d-1 is formed on the above-described first layer 12d-1. Then, two layers of the first layer 12d-1 and the second layer 12d-2, which was laminated on the above-described first layer 12d-1, are grouped as a set, and a predetermined number n of lamination layers wherein "n" is a positive integer is laminated.

Thus, thin films having different refractive indexes from one another are superposed in a multi-layered form, besides, a periodic length d corresponding to a film thickness of a set of the first layer 12d-1 and the second layer 12d-2 is formed so as to utilize Bragg reflection. As a result, light input to the multilayer film 12d is reflected by a boundary surface defined between the first layer 12d-1 and the second layer 12d-2 to generate interference of the light reflected by the boundary surface between the first layer 12d-1 and the second layer 12d-2, whereby light having a predetermined energy is reflected at high reflectivity.

Respective multilayer films of the sector-shaped areas 12c-100, 12c-90, 12c-80, 12c-70, 12c-60, 12c-50,12c-40,12c-30, and 12c-20 in the above-described surface part 12b are formed by laminating the predetermined number n of lamination layers of the first layer 12d-1 and the second layer 12d-2 each of which has a predetermined refractive index with the periodic length d in such that light of a corresponding predetermined energy is reflected at high reflectivity.

Specifically, the first layer 12d-1 is made from, for example, a heavy element such as Ni (nickel), and Mo (molybdenum) , while the second layer 12d-2 is made from, for example, a light element such as C (carbon) and Si (silicon).

It is to be noted that a well-known technology may be applied for forming the multilayer film 12d, which reflects light of a predetermined energy, in the respective sector-shaped areas 12c in the surface part 12b of the reflecting mirror 12. In this connection, a detailed explanation of an apparatus for film formation and a method for the film formation are omitted herein.

In the case where the multilayer film 12d is formed in the predetermined sector-shaped areas 12c in the surface part 12b of the reflecting mirror 12, it may be arranged in such that sector-shaped areas 12c other than the predetermined sector-shaped areas 12c are masked, and film formation is sequentially made in every sector-shaped areas 12c. As another manner, it may be arranged in such that the reflecting mirror 12 is divided into thirty-six small pieces in every sector-shaped areas 12c in the surface part 12b, a film is formed on each of these thirty-six small pieces, and then these pieces are incorporated into a single surface part 12b to obtain the reflecting mirror 12.

Incidentally, the superconducting tunnel junction device 14 is a kind of Josephson device, which has a structure wherein a thin insulation film (e.g., alumina) is sandwiched in superconducting metallic thin films (e.g., niobium).

The superconducting tunnel junction device 14 is a detector condensing light rays reflected by the reflecting mirror 12 as described above. More specifically, the superconducting tunnel junction device 14 operates at cryogenic temperature of around 0.3 K, and when light is input to the superconducting tunnel junction device 14, energy of the light thus input is absorbed by the superconducting metallic thin film.

When the energy of the light input to the superconducting metallic thin film of the superconducting tunnel junction device 14 is absorbed, dissociation of Cooper pair and generation of phonon appear. Furthermore, a process wherein the phonon generated dissociates the Cooper pair is caused within a period of time of around 10⁻¹² seconds.

In this case, quasiparticles are produced, and the quasiparticles pass through an insulation film by means of quantum tunneling effect, whereby an electric currant in proportion to the energy of light input, and when the electric current is taken out by the use of a predetermined circuit system as a signal, the superconducting tunnel junction device 14 functions as a detector.

Thus, the superconducting tunnel junction device 14 functions as a detector having high sensitivity and high spectroscopic capability in a wide band extending from X-ray to infrared ray.

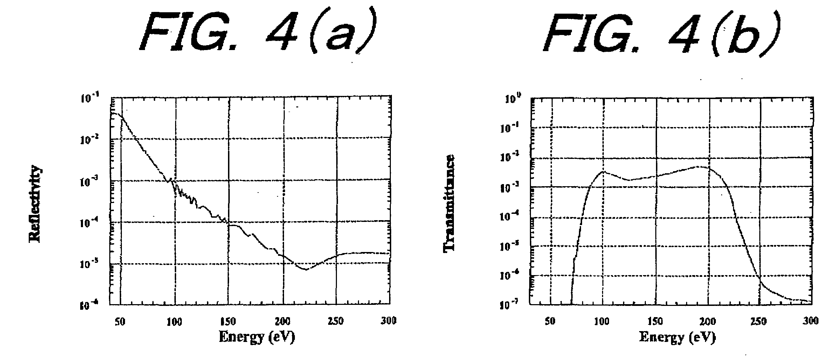

Specifically, FIG. 4(a) indicates reflectivity on the surface of the superconducting tunnel junction device 14, and FIG. 4(b) indicates transmittance on the surface of the superconducting tunnel junction device 14. As is apparent from these reflectivity and transmittance of the superconducting tunnel junction device 14, absorptance in photon of the superconducting tunnel junction device 14 is 95% or higher.

Moreover, the superconducting tunnel junction device 14 has very high absorptance of photon in a region extending from soft X-ray to extreme ultraviolet ray, so that when the superconducting tunnel junction device 14 exhibiting behavior for producing signals due to absorption of photon is used in accordance with a manner as described above, spectral detection of light is realized in a region extending from soft X-ray to visible light.

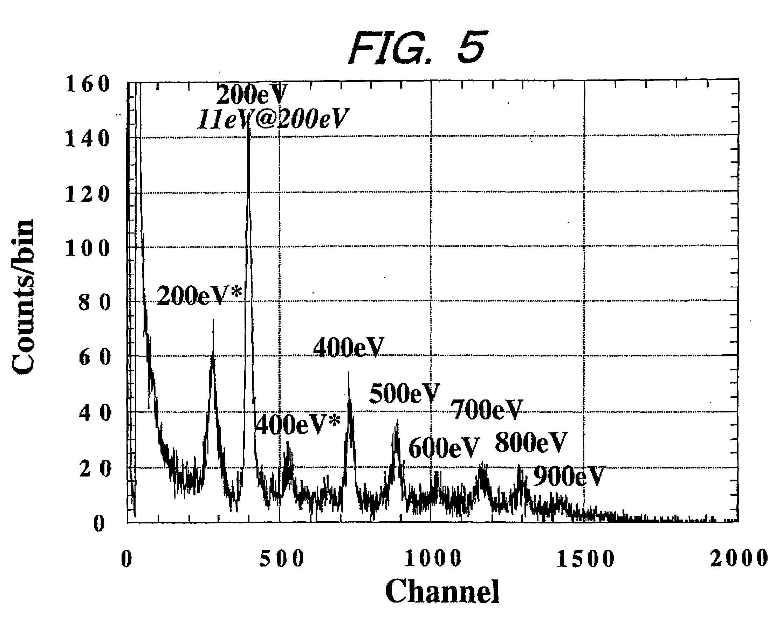

FIG. 5 is a graph indicating an example of energy resolving power of the superconducting tunnel junction device 14 in a region extending from soft X-ray to extreme ultraviolet ray.

In the constitution as described above, when the wide band normal incident telescope 10 according to the present invention is used for astronomic observation, first, light rays extending over a wide energy band are input vertically to the surface part 12b of the reflecting mirror 12.

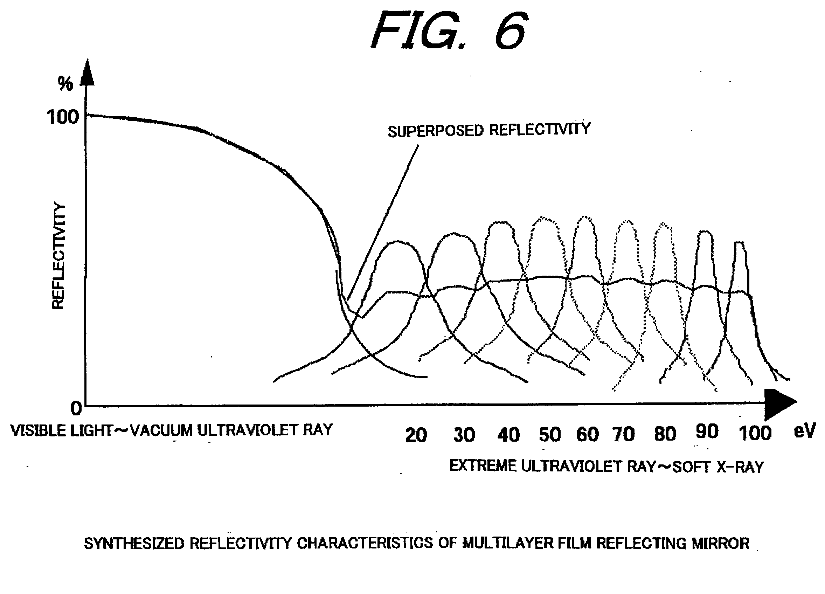

In this case, a light ray having 100 ev energy, a light ray having 90 eV energy, a light ray having 80 eV energy, a light ray having 70 eV energy, a light ray having 60 ev energy, a light ray having 50 eV energy, a light ray having 40 eV energy, a light ray having 30 eV energy, and a light ray having 20 eV energy are reflected at high reflectivity, respectively, in the sector-shaped area 12c-100, the sector-shaped area 12c-90, the sector-shaped area 12c-80, the sector-shaped area 12c-70, the sector-shaped area 12c-60, the sector-shaped area 12c-50, the sector-shaped area 12c-40, the sector-shaped area 12c-30, and the sector-shaped area 12c-20 among light rays in the wide energy band, which were input to the surface part 12b of the reflecting mirror 12 (see FIG. 6).

As described above, light rays each having a predetermined energy in a region extending from soft X-ray to extreme ultraviolet ray are reflected at each high reflectivity in each corresponding sector-shaped area 12c in the surface part 12b of the reflecting mirror 12. On the other hand, respective light rays in a region extending from visible light to vacuum ultraviolet ray, which have lower energies than that of the region extending from the soft X-ray to extreme ultraviolet ray, are reflected by a surface 12dd in the multilayer films 12d of the sector-shaped areas 12c in total reflection (specular reflection).

As a result, a reflectivity in the surface part 12d of the reflecting mirror 12 is the one which is obtained by combining respective reflection factors in the sector-shaped areas 12c with reflectivity in the surface 12dd of the multilayer film 12d (see FIG. 6). Accordingly, respective light rays in a region extending from soft X-ray to visible light among light rays input in a wide energy band are reflected by the surface part 12d of the reflecting mirror 12 at high reflection factors.

Then, the light rays reflected by the surface part 12d of the reflecting mirror 12 are condensed into the superconducting tunnel junction device 14. In this case, light rays reflected by four sector-shaped areas 12c corresponding to four sections in the surface part 14b of the reflecting mirror 12, in other words, four places are condensed into the superconducting tunnel junction device 14 with respect to respective light rays each having a predetermined energy in the region extending from soft X-ray to extreme ultraviolet ray, so that high imaging performance is obtained.

As described above, when light rays reflected by the surface part 12d of the reflecting mirror 12 are condensed to input to the superconducting tunnel junction device 14, electric currents in proportion to energies of light rays input as described above are produced, and signals are taken out by the use of a predetermined circuit system, whereby spectral detection of light rays in the region extending from soft X-ray to visible light is performed by the single reflecting mirror 12 and the superconducting tunnel junction device 14.

In the wide band normal incident telescope 10, the reflecting mirror 12 wherein a plurality of sector-shaped areas 12c in which the multilayer film 12d corresponding to light rays in the region extending from soft X-ray to visible light is disposed on the surface part 12b, and the superconducting tunnel junction device 14 having high sensitivity and high spectral capability in a wide band extending from X-ray to infrared ray is disposed as described above. As a result, respective light rays in a wide energy band in the region extending from soft X-ray to visible light are reflected by the plurality of sector-shaped areas 12c in the single reflectingmirror 12 as well as by the surface 12dd of the multilayer film 12d at respective high reflection factors, and the light rays thus reflected are subjected to spectral detection by means of the superconducting tunnel junction device 14.

For this reason, respective light rays in a wide energy band, i.e., light rays in the region extending from soft X-ray to visible light, particularly light rays in a region extending from soft X-ray to extreme ultraviolet ray can be observed by the wide band normal incident telescope 10 according to the present invention.

Furthermore, since respective light rays in a wide energy band in the region extending from soft X-ray to visible light are reflected by the single reflecting mirror 12 at respective high reflection factors in the wide band normal incident telescope 10 according to the present invention, there is no need to use a plurality of normal incident telescopes, so that reduction in costs can be achieved, besides light rays in a wide energy band can be efficiently observed simultaneously.

Moreover, since light rays in a wide energy band in the region extending from soft X-ray to visible light are reflected by the single reflecting mirror 12 at high reflection factors, respectively, in the wide band normal incident telescope 10 according to the present invention, it is sufficient to provide a single superconducting tunnel junction device 14, which condenses light rays reflected by the reflecting mirror 12, so that reduction in costs can be achieved, besides space saving can be realized in an astronomical satellite into which the wide band normal incident telescope 10 is to be mounted in case of astronomic observation, because it is sufficient to provide a single cooler for cooling the superconducting tunnel junction device 14.

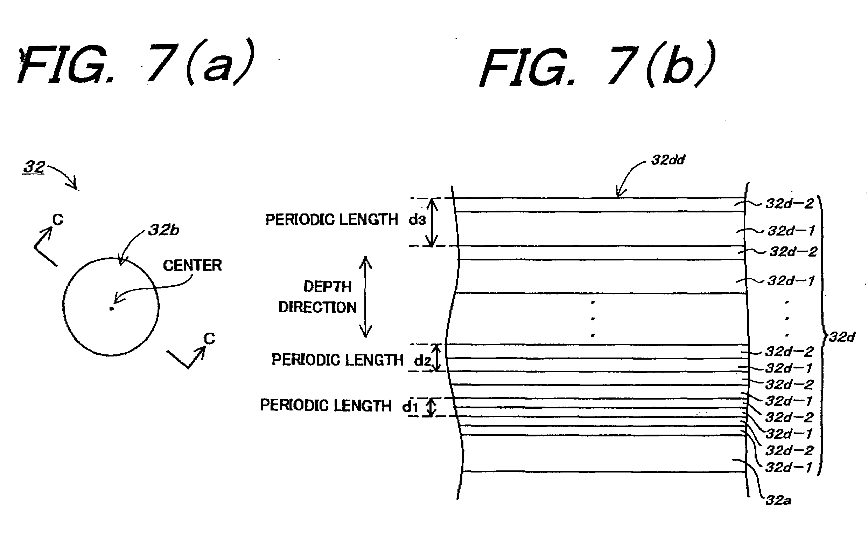

In the following, a second embodiment of a wide band normal incident telescope according to the present invention will be described by referring to FIGS. 7(a) and 7(b).

The second embodiment differs from the above-described first embodiment in that the plurality of sector-shaped areas 12c in which the multilayer film 12d corresponding to respective light rays each having a predetermined energy has been formed are disposed on the surface part 12b in the reflecting mirror 12 of the above-described first embodiment (see FIGS. 2 and 3), while a multilayer film 32d each having different periodic length is formed in a surface part 32b of a reflecting mirror 32 in the second embodiment.

Namely, each periodic length d in the multilayer film 12d of the reflecting mirror 12 in the above-described first embodiment does not vary in the depth direction of the multilayer films 12d to coincide with each other (see FIG. 3), while each periodic length d in the multilayer film 32d of the reflecting mirror 32 in the second embodiment varies continuously in the depth direction of the multilayer film 32d (see FIG. 7(b)).

More specifically, it is arranged in such that each periodic length d becomes shorter with drawing apart from a surface 32dd in the depth direction of the multilayer film 32d, while each periodic length becomes longer with approaching to the surface 32dd.

Accordingly, as shown in FIG. 7(b), a periodic length d₁ positioned at the farthermost away from the surface 32dd, a periodic length d₂ positioned at a halfway point in the depth direction, and a periodic length d₃ positioned in the vicinity of the surface 32dd of the multilayer film 32d are in a relationship of the periodic length d₁ < the periodic length d₂ < the periodic length d₃.

Furthermore, the surface part 32b of such reflecting mirror 32 is not divided into a plurality of sector-shaped areas unlike the surface part 12b of the reflecting mirror 12 have been divided into the plurality of the sector-shaped areas 12c in the first embodiment.

However, each periodic length d of the multilayer film 32d in the surface part 32b of the reflecting mirror 32 varies continuously in the depth direction of the multilayer film 32d so as to correspond respectively to light rays each having a predetermined energy in a region extending from soft X-ray to extreme ultraviolet ray. Thus, energies of light rays reflected by utilizing Bragg reflection in a boundary surface defined between a first layer 32d-1 and a second layer 32d-2 in each of different periodic lengths d (for example, periodic lengths d₁, d₂, and d₃), become different from one another.

Accordingly, when light rays in a wide energy band are input vertically to the surface part 32b of the reflecting mirror 32, respectively, in a wide band normal incident telescope of the second embodiment, the light rays each having a predetermined energy transmit into the multilayer film 32d of the reflecting mirror 32 in the depth direction in response to magnitude of the energies, and the light rays thus transmitted are reflected by a boundary surface defined between the first layer 32d-1 and the second layer 32d-2 each of them having a corresponding periodic length d.

As a result, interference of the light rays reflected by the boundary surface defined between the first layer 32d-1 and the second layer 32d-2 arises, so that respective light rays input in a wide energy band among those in a region extending from soft X-ray to visible light are reflected, respectively, at high reflectivity.

Therefore, light rays in such wide energy band in the region extending from soft X-ray to visible light are reflected by the single reflecting mirror 32 at each high reflectivity in also a wide band normal incident telescope of the second embodiment with a modification wherein the surface part 32b of the reflecting mirror 32 is not divided into a plurality of sector-shaped areas, as in the case of the wide band normal incident telescope 10 according to the above-described first embodiment, so that spectral detection can be made by means of the superconducting tunnel junction device 14.

Furthermore, light rays in the wide energy band in the region extending from soft X-ray to visible light, particularly, respectiye light rays in a region extending from soft X-ray to extreme ultraviolet ray can be observed also in a wide band normal incident telescope according to the second embodiment as in the above-described wide band normal incident telescope 10 of the first embodiment, whereby reduction in costs can be achieved, and light rays in a wide energy band can be observed efficiently, besides, space saving can be realized in an astronomical satellite or the like wherein the wide band normal incident telescope is to be disposed in case of astronomic observation.

In the above-described second embodiment, the surface part 32b of the reflecting mirror 32 has not been divided into a plurality of sector-shaped areas, but each of periodic lengths d in the multilayer film 32d has been continuously changed in the depth direction of the multilayer film 32d in the whole circular region of the surface part 32b (see FIG. 7(b)) with such modification that the surface part 32b of the reflecting mirror 32 has not been divided into a plurality of sector-shaped areas.

In other words, although it has been arranged in the above-described second embodiment in such that a type of the multilayer 32d wherein each periodic length d is changed continuously in the depth direction (such "multilayer 32d wherein each periodic length d is changed continuously in the depth direction" is optionally referred to as "supermirror" in the specification) has been a single type in the surface part 32b of the reflecting mirror 32, the invention is not limited thereto as a matter of course, but the surface part 32b of the reflecting mirror 32 may be composed of plural types of supermirrors.

For instance, it may be arranged in such that the surface part 32b of the reflecting mirror 32 is divided into a plurality of sector-shaped areas, and the plurality of the respective sector-shaped areas form different types of supermirrors.

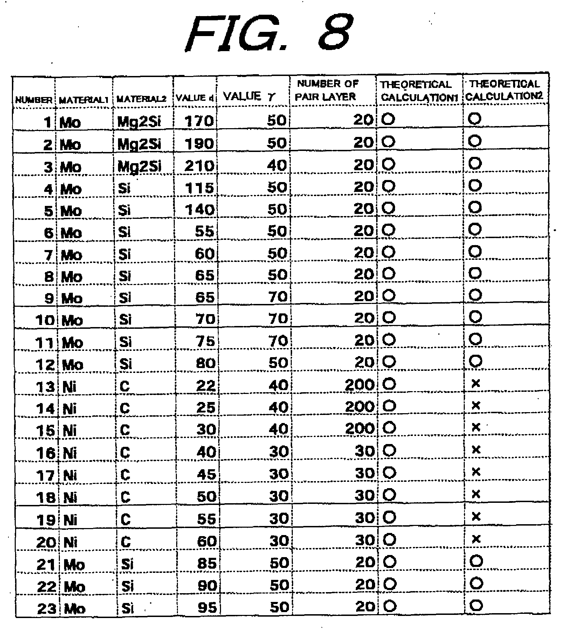

In the following, reflectivity in a variety of reflecting mirrors will be described by referring to results of simulations shown in FIGS. 8 through 15.

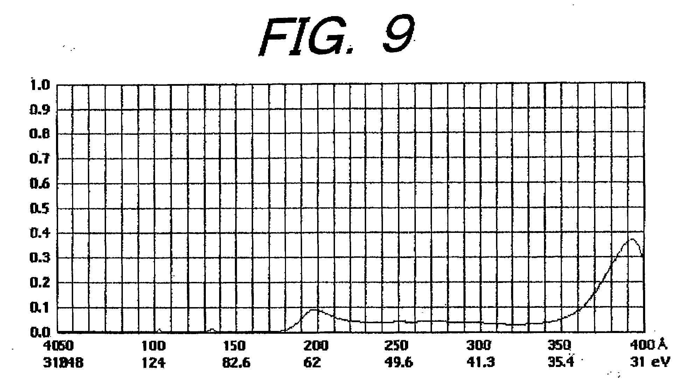

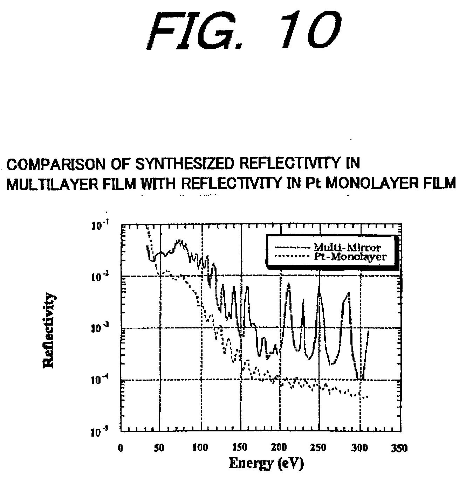

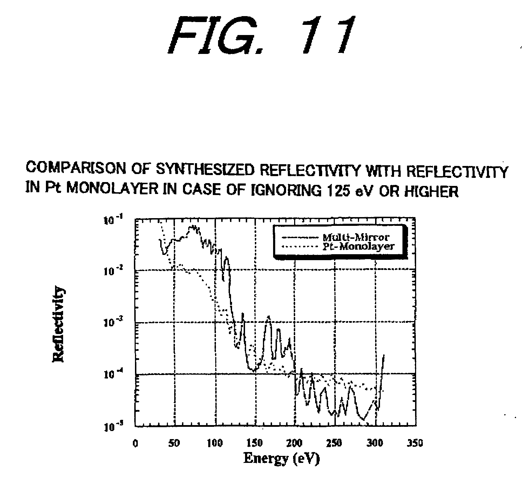

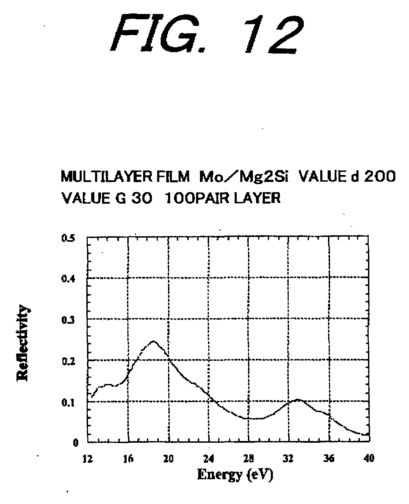

FIGS. 8 through 12 indicate results of simulations as to reflectivity of reflecting mirrors corresponding to the reflecting mirror 12 in the wide band normal incident telescope 10 according to the first embodiment (see FIGS. 1 through 6) wherein FIG. 8 is a table showing theoretical reflectivity data in plural types of respective sector-shaped areas in a surface part of each reflecting mirror used, FIG. 9 is a graphical representation indicating theoretical values of reflectivity in a multilayer film (reference number 3) in the theoretical reflectivity data shown in FIG. 8, FIG. 10 is a graphical representation indicating theoretical values of synthesized reflectivity of a reflecting mirror in the case where energies up to 300 eV are considered, FIG. 11 is a graphical representation indicating theoretical values of synthesized reflectivity of a reflecting mirror in the case where energies 125 eV or higher are not considered, and FIG. 12 is a graphical representation indicating theoretical values of synthesized reflectivity of a reflecting mirror with respect to light rays having energies 30 eV or lower, respectively.

It is to be noted herein that a reflecting mirror as to which the results of simulations are indicated in FIGS. 8 through 12 corresponds to the reflecting mirror 12 in the wide band normal incident telescope 10 of the first embodiment (see FIGS. 1 through 6). In this respect, the reflecting mirror 12 involves nine sector-shaped areas 12c in a section so that nine types of multilayer films 12d have been formed, while a reflecting mirror used in the simulations involves twenty-three sector-shaped areas in a section so that twenty-three types of multilayer films have been formed.

A column "Number" in the table of FIG. 8 means each reference number of twenty-three types of different multilayer films, a column "Material 1" means a material for preparing a thin film corresponding to the first layer 12d-1 in the reflecting mirror 12, a column "Material 2" means a material for preparing a thin film corresponding to the second layer 12d-2 in the reflecting mirror 12, a column "valued" means periodic length d, a column "value Y" means a film thickness ratio of a pair of layers, i.e., a ratio of film thickness of the material 1/(film thickness of the material 1 + film thickness of the material 2), and a column "Number of Pair Layer" means a predetermined number n of laminations in a multilayer film.

Furthermore, a column "Theoretical Calculation 1" indicates a type of multilayer film constituting a reflecting mirror in the case where energies of up to 300 eV are considered, and in this case, a simulation is conducted by using a reflecting mirror wherein twenty-three types of multilayer films have been formed.

On one hand, a column "Theoretical Calculation 2" indicates a type of multilayer film constituting a reflecting mirror in the case where energies of 125 eV or higher are not considered, and in this case, a simulation is conducted by using a reflecting mirror wherein fifteen types of multilayer films of those represented by reference numbers 1 through 12 as well as those represented by reference numbers 21 through 23 have been formed.

For instance, a multilayer film represented by reference number 3 indicates values of reflectivity as shown in FIG. 9. Synthesized reflectivity of a reflecting mirror wherein these twenty-three types of multilayer films have been formed, and energies up to 300 eV are considered is about five times better than synthesized reflectivity of a reflecting mirror wherein a single Pt layer film has been formed on a surface part over the substantially whole area in its energy band as shown in FIG. 10.

Moreover, synthesized reflectivity of a reflecting mirror wherein fifteen types of multilayer films have been formed without considering energies of 125 eV or higher is better effective synthesized reflectivity in comparison with that of a reflecting mirror wherein twenty-three types of multilayer films have been formed with taking energies up to 300 eV into consideration (see FIG. 11).

As described above, a reflecting mirror under a condition wherein effective synthesized reflectivity is elevated can be realized in the case where 125 eV or higher energies are not considered by means of multilayer films of less types than that of a reflectingmirror wherein energies up to 300 eV are considered.

Furthermore, as shown in FIG. 12, reflection factors of from several percent to several tens percent can be maintained in an extent from soft X-ray to vacuum ultraviolet ray in a reflecting mirror wherein twenty-three types of multilayer films have been formed with taking energies of up to 300 eV into consideration.

Thus, light rays in a region extending from visible light to vacuum ultraviolet ray, which corresponds to a lower energy region than that extending from soft X-ray to ultraviolet ray, are reflected by the multilayer films in the sector-shaped areas of the reflecting mirror, respectively, at high reflectivity.

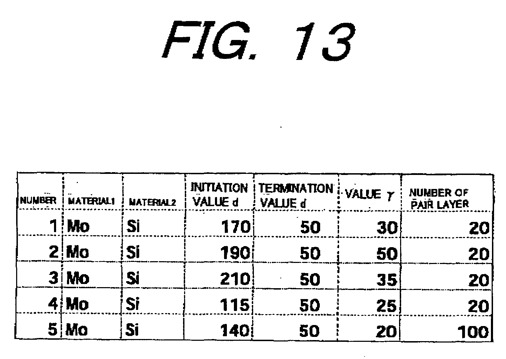

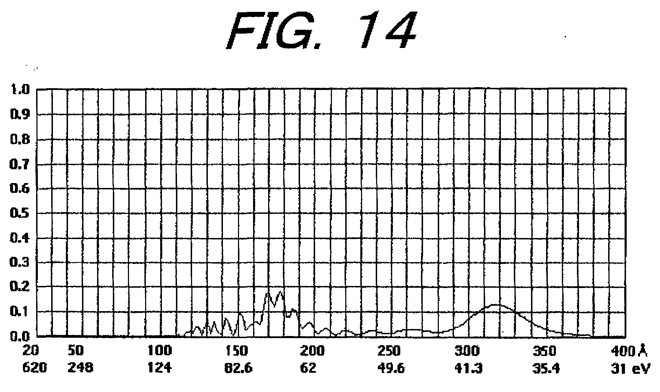

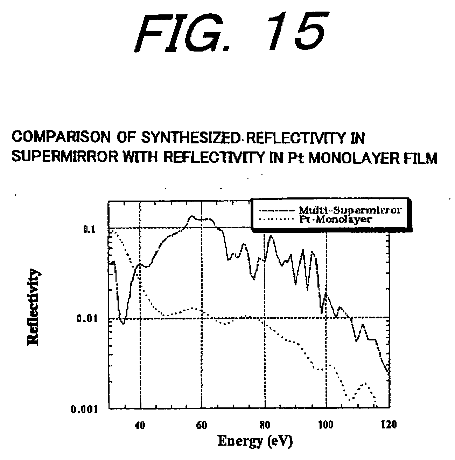

In FIGS. 13 through 15, results of a simulation as to reflectivity of a reflecting mirror corresponding to the reflecting mirror 32 in the wide band normal incident telescope according to the above-described second embodiment (see FIGS. 7(a) and 7(b)) are shown. FIG. 13 is a table indicating theoretical reflectivity data with respect to plural types of respective supermirrors in its surface part of a reflecting mirror used. FIG. 14 is a graphical representation indicating respective theoretical values of reflectivity as to a supermirror (reference number 4) with respect to the theoretical reflectivity data shown in FIG. 13. FIG. 15 is a graphical representation indicating theoretical values of synthesized reflectivity of a reflecting mirror having a surface part composed of plural types of supermirrors with respect to the theoretical reflectivity data shown in FIG. 13.

It is to be noted that although a reflecting mirror indicating simulated results of FIGS. 13 through 15 corresponds to the reflecting mirror 32 in a wide band normal incident telescope of the above-described second embodiment (see FIGS. 7 (a) and 7 (b)), a single type of supermirror has been formed with such a modification that the surface part 32b of the reflecting mirror 32 is not divided into a plurality of sector-shaped areas, while a reflecting mirror used in the simulation is the one wherein a surface part has been divided into a plurality of sector-shaped areas, whereby five types of supermirrors have been formed.

In this connection, respective theoretical reflectivity data of the five types of supermirrors in the reflecting mirror used in the simulation are shown in FIG. 13. In the table of FIG. 13, a column "Number" represents reference numbers of five types of different supermirrors, a column "Material 1" indicates a material for forming a thin film corresponding to a first layer 32d-1 in a reflecting mirror 32, a column "Material 2" indicates a material for forming a thin film corresponding to a second layer 32d-2 in the reflecting mirror 32, a column "Initiation Value d" represents a periodic length corresponding to that of d₃ in the vicinity of a surface 32dd in a multilayer film 32d of the reflecting mirror 32, a column "Termination Value d" represents a periodic length corresponding to that of d₁ in the vicinity of a main body part 32a in the multilayer film 32d of the reflecting mirror 32, a column of "Value Y" represents a ratio of film thickness of a pair of layers, i.e., film thickness of the material 1/ (film thickness of the material 1 + film thickness of the material 2), and a column "Number of Pair Layer" represents the number n of predetermined layer of lamination for a multilayer film.

For instance, a supermirror designated by reference number 4 indicates reflection factors as shown in FIG. 14. Synthesized reflectivity in a reflecting mirror wherein these five types of supermirrors are formed is better than that of a reflecting mirror wherein a Pt single layer film is formed within a range of energy band from about 40 eV to about 120 eV as shown in FIG. 15.

However, advantages of a supermirror cannot be obtained in right incidence with respect to soft X-ray having an energy band of 120 eV or higher.

The above-described embodiments may be modified as described in the following paragraphs (1) through (7).

(1) In the first embodiment (see FIG. 2), a top coating of Pt or the like may be further applied to the surface 12dd being the uppermost layer of the multilayer film 12d in the surface part 12b of the reflecting mirror 10. According to such modification as described above, reflectivity of light rays in a region extending from visible light to vacuum ultraviolet ray, which has a lower energy than that of a region extending from soft X-ray to extreme ultraviolet ray, can be further elevated.

(2) Each dimension of diameters, curvatures in a curved surface and the like in the surface parts 12b and 32b of the reflecting mirror 10 in the above-described first and second embodiments may be determined in accordance with an object to be observed by the reflecting mirror 10, a space in an astronomical satellite in which a telescope containing the reflecting mirror 10 is to be mounted, and the like situations.

(3) In the above-described embodiments, there is a possibility of allowing a light event on a low energy side to be cancelled into a phonon event that is produced by light having a high energy in the case when light rays extending from soft X-ray (300 eV) to visible range are detected simultaneously, because of characteristics of the superconducting tunnel junction device 14.

In this respect, when band pass filters for selecting soft X-ray, extreme ultravioletray, ultravioletray, and visible light, respectively, are prepared, spectral detection for light rays in a region extending from soft X-ray to visible light can be made more positively.

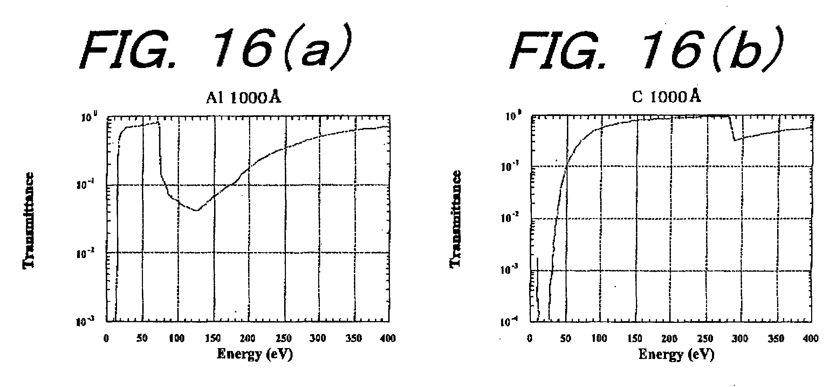

In this case, a thin film filter utilizing absorption structure of material, e.g., Al/C (aluminum/carbon) metallic thin film filter can be used for light rays of from soft X-ray to vacuum ultraviolet ray (see FIGS. 16(a) and 16(b)), and a filter utilizing absorption structure of material, a band pass filter utilizing interference or the like can be used for light rays of from vacuum ultraviolet ray to visible light.

On one hand, respective events of soft X-ray, extreme ultraviolet ray, ultraviolet ray, and visible light may be separated from respective phonon events by means of a rise-up time of electrical signals detected as a result of inputting reflected light to the superconducting tunnel junction device 14 without using such band pass filter as described above.

According to the modifications as described above, light rays of from soft X-ray (300 eV) to visible light can be simultaneously detected more positively.

(4) In the above-described embodiments, a plurality of the superconducting tunnel junction devices 14 may be used to implement spectroscopic imaging, and in such case, a variety of circuit systems may be changed or arranged.

(5) In the first embodiment (see FIG. 2), although the surface 12b of the reflecting mirror 10 has been divided into sector-shaped areas 12c each having a central portion P as its apex to form the multilayer film 12d by which light rays of nine types of energies are reflected, the invention is not limited thereto as a matter of course, but types of such multilayer films are not limited to nine types as shown in FIGS. 8 through 12. In brief, a multilayer film by which light rays in a region extending from soft X-ray to visible light are reflected may be formed in the respective sector-shaped areas by the use of a predetermined material, respectively.

Moreover, such multilayer film by which light rays each having a predetermined energy are reflected may be formed with such design (i.e., an order in alignment of sector-shaped areas, the number of sections and the like) , a ratio of sectioning (i.e., magnitude of central angle α) so as to maximize intensity of reflection as to respective energies at detecting positions.

For instance, since a ratio of sectioning involves a degree of freedom, which can be increased and decreased in response to a predetermined purpose, magnitude of the central angle α may be arranged so as to increase with increase in energies of light rays reflected by a multilayer film formed in sector-shaped areas. According to such an arrangement as described above, light ray having the higher energy among light rays input to a surface part of a reflecting mirror in a wide energy band is reflected at the higher reflectivity in its corresponding sector-shaped area involving a wide area.

Furthermore, in the case where a specified wavelength is meaningless in view of observation, for example, in the case where light rays of 50 eV are not required, but an amount of light of 100 eV is intended to increase, a sector-shaped area wherein a multilayer film reflecting an energy of 50 eV has been formed is changed into a sector-shaped area wherein a multilayer film reflecting an energy of 100 eV. As a result, light rays of 100 eV come to be reflected at higher reflectivity, so that an amount of light of 100 eV can be increased.

Moreover, a manner for sectioning is not limited also to a manner for slicing a pie in sector-shaped areas as a matter of course, but it may be arranged, for example, in such that the surface 12b of the reflecting mirror 10 is divided into areas each having a predetermined shape, and plural types of multilayer films by which light rays in a region extending from soft X-ray to visible light are reflected are formed in the respective areas having the predetermined shapes.

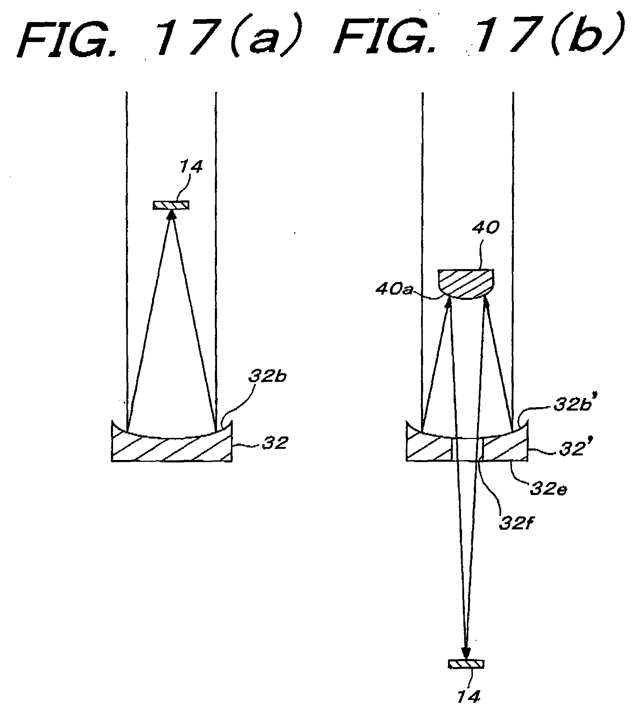

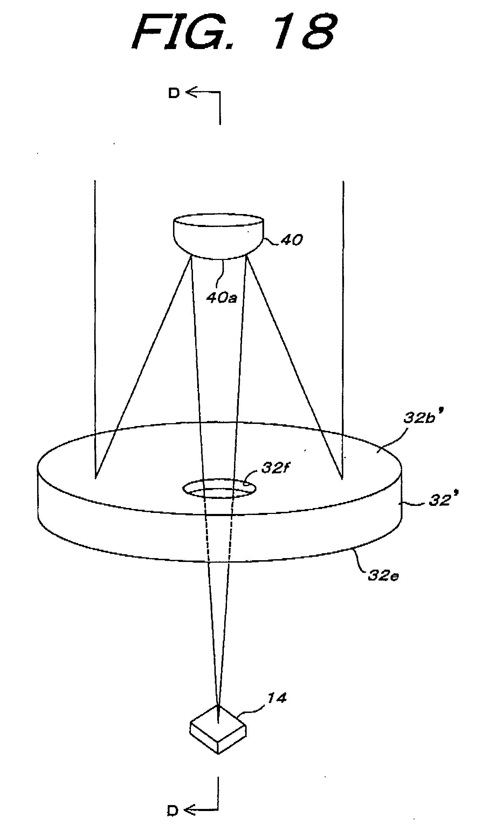

(6) In the second embodiment (see FIGS. 7(a) and 7(b)), although the superconducting tunnel junction device 14 has been disposed on a side of the surface part 32b of the reflecting mirror 32 (see FIG. 17(a)), the invention is not limited thereto as a matter of course, but it may be arranged, for example, as shown in FIG. 17(b) and FIG. 18 in such that a superconducting tunnel junction device 14 is not disposed on a side of the surface part 32b' in the reflecting mirror 32', but it is disposed on a side of a rear part 32e positioned on a side opposite to the surface part 32b' of the reflecting mirror 32', whereby a Cassegrain type telescope is fabricated.

Specifically, the surface part 32b' of the reflecting mirror 32' is composed of supermirrors a situation of which is the same as the surface part 32b of the reflecting mirror 32 in the above-described second embodiment. Furthermore, a hole portion 32f, which is opened in the surface part 32b' and the rear part 32e, is bored at a central region of the reflecting mirror 32'.

The superconducting tunnel junction device 14 is disposed on the side of the rear part 32e of the reflecting mirror 32', and a reflecting mirror 40 is disposed on the side of the surface part 32b' of the reflecting mirror 32'. A surface part 40a of the reflecting mirror 40 has a convex surface and is composed of supermirrors. More specifically, the supermirrors of the reflecting mirror 40 reflect respectively light rays each having a predetermined energy in a region extending from soft X-ray to extreme ultraviolet ray, besides it exhibits high reflection factors due to total reflection over a region extending from vacuum ultraviolet ray to visible light. In this respect, a system of a wide band normal incident telescope may be designed in response to a variety of conditions such as types, focal distances and the like of supermirrors constituting the surface part 32b' being the concaved surface of the reflecting mirror 32'.

In the wide band normal incident telescope having such constitution as described above, light rays in a wide energy band, which are input to the surface part 32b' of the reflecting mirror 32' being its primary mirror are reflected by supermirrors constituting the surface part 32b'. On one hand, light rays reflected by the surface part 32b' of the reflecting mirror 32' are reflected further by supermirrors constituting the surface part 40a of the reflecting mirror 40 being a secondary mirror. Thus, light rays reflected by the surface part 40a of the reflecting mirror 40 are input to the superconducting tunnel junction device 14 by going through the hole part 32f of the reflecting mirror, so that the light rays are spectrally detected by means of the superconducting tunnel junction device 14.

When the reflecting mirror 32' being a primary mirror and the reflecting mirror 40 being a secondary mirror are used, light rays in a wide energy band input to the surface part 32b' of the reflecting mirror 32' are reflected twice, and its optical path is folded back by the reflecting mirror 40 to be focused on the rear side of the reflecting mirror 32'.

As a result, it becomes possible to perform aberration correction by means of two mirror planes of the reflecting mirror 32' of the primary mirror and the reflecting mirror 40 of the secondary mirror. Moreover, since the superconducting tunnel junction device 14 is disposed on the rear side of the reflecting mirror 32' of the primary mirror, incorporation of a cooling system such as a cooling device for cooling the superconducting tunnel junction device 14 becomes easy.

(7) The above-described embodiments may be combined appropriately with the modifications described in the above paragraphs (1) through (6).

Since the present invention has been constituted as described above, light rays in a wide energy band can be reflected, respectively, by a single reflecting mirror at each high reflectivity, so that there is such an excellent advantage that light rays in a wide energy band, for example, those in a region extending from soft X-ray to visible light can be observed.

Furthermore, since the present invention has been constituted as described above, light rays in a wide energy band can be reflected, respectively, by a single reflecting mirror at each high reflectivity, whereby there is no need of employing a plurality of normal incident telescopes, so that there are such an excellent advantages that reduction in costs can be achieved and that light rays in a wide energy band can be efficiently observed.

It will be appreciated by those of ordinary skill in the art that the present invention can be embodied in other specific forms without departing from the spirit or essential characteristics thereof.

The presently disclosed embodiments are therefore considered in all respects to be illustrative and not restrictive. The scope of the invention is indicated by the appended claims rather than the foregoing description, and all changes that come within the meaning and range of equivalents thereof are intended to be embraced therein.

The entire disclosure of Japanese Patent Application No. 2000-400417 filed on December 28, 2000 and Japanese Patent Application No. 2001-382599 filed on December 17, 2001 including specification, claims, drawing and summary are incorporated herein by reference in its entirety.

## Claims

1. A wide band normal incident telescope, comprising:
a reflecting mirror involving a surface part wherein different types of multilayer films have been formed, respectively, in every regions of predetermined shapes, and reflecting light rays, which were input, by said surface part; and
a detector to which the light rays reflected by said surface part are input, and which detects spectrally the light rays thus input.

2. A wide band normal incident telescope as claimed in claim 1 wherein:
the different types of multilayer films on said surface part are the ones reflecting respectively light rays having predetermined energies in a region extending from soft X-ray to extreme ultraviolet ray as well as having high reflection factors due to total reflection over a region extending from vacuum ultraviolet ray to visible light.

3. A wide band normal incident telescope as claimed in any one of claims 1 and 2 wherein:
said surface part involves a circular shape and which has been divided into a plurality of sector-shaped areas each having a predetermined central angle containing a central portion of said circular shape as its apex.

4. A wide band normal incident telescope as claimed in claim 3 wherein:
said surface part is composed of a plurality of sections each involving a predetermined number of said sector-shaped areas in which types of multilayer films formed therein and orders in alignment of said multilayer films coincide with each other in said plural sections, respectively.

5. A wide band normal incident telescope, comprising:
a reflecting mirror involving a surface part wherein multilayer films have been formed, and reflecting light rays, which were input, by said surface part,
each periodic length being changed continuously in the multilayer film along the depth direction of said multilayer film to reflect, respectively, light rays each having a predetermined energy in a region extending from soft X-ray to extreme ultraviolet ray,
said multilayer films having high reflection factors due to total reflection over a region extending from vacuum ultraviolet ray to visible light; and
a detector to which the light rays reflected by said surface part of said reflecting mirror are input, and which detects spectrally the light rays thus input.

6. A wide band normal incident telescope, comprising:
a first reflecting mirror involving a first surface part wherein multilayer films have been formed, and reflecting light rays, which were input, by said first surface part,
each periodic length being changed continuously in the multilayer film along the depth direction of said multilayer film to reflect, respectively, light rays each having a predetermined energy in a region extending from soft X-ray to extreme ultraviolet ray,
said multilayer films having high reflection factors due to total reflection over a region extending from vacuum ultraviolet ray to visible light;
a second reflecting mirror involving a second surface part wherein multilayer films have been formed, and reflecting light rays, which were reflected by said first surface part of said first reflecting mirror, by said second surface,
each periodic length being changed continuously in the multilayer film along the depth direction of said multilayer film in response to said first surface of said first reflecting mirror to reflect, respectively, light rays each having a predetermined energy in a region extending from soft X-ray to extreme ultraviolet ray,
said multilayer films having high reflection factors due to total reflection over a region extending from vacuum ultraviolet ray to visible light; and
a detector to which the light rays reflected by said second surface part of said second reflecting mirror are input, and which detects spectrally the light rays thus input.

7. A wide band normal incident telescope as claimed in any one of claims 1, 2, 5 and 6 wherein:
said detector is a superconducting tunnel junction device.

8. A wide band normal incident telescope as claimed in claim 3 wherein:
said detector is a superconducting tunnel junction device.

9. A wide band normal incident telescope as claimed in claim 4 wherein:
said detector is a superconducting tunnel junction device.

10. A wide band normal incident telescope, comprising:
a reflecting mirror having a surface part involving four sections forming a circular shape, each section being prepared by disposing clockwise sequentially nine sector-shaped areas, each having a central angle of ten degrees, of a first sector-shaped area in which a multilayer film reflecting light rays of 100 eV energy has been formed, a second sector-shaped area in which a multilayer film reflecting light rays of 90 eV energy has been formed, a third sector-shaped area in which a multilayer film reflecting light rays of 80 eV energy has been formed, a fourth sector-shaped area in which a multilayer film reflecting light rays of 70 eV energy has been formed, a fifth sector-shaped area in which a multilayer film reflecting light rays of 60 eV energy has been formed, a sixth sector-shaped area in which a multilayer film reflecting light rays of 50 eV energy has been formed, a seventh sector-shaped area in which a multilayer film reflecting light rays of 40 eV energy has been formed, a eighth sector-shaped area in which a multilayer film reflecting light rays of 30 eV energy has been formed, and a ninth sector-shaped area in which a multilayer film reflecting light rays of 20 eV energy has been formed, and reflecting light rays, which were input, by said surface part; and
a superconducting tunnel junction device to which the light rays reflected by said surface part of said reflecting mirror are input, and which detects spectrally the light rays thus input.
